# EUROPEAN PATENT APPLICATION

(11) **EP 3 273 050 A1**
(43) Date of publication of application: **24.01.2018**
(21) Application number: 16765168.6
(22) Date of filing: 26.02.2016
(51) Int. Cl.: F03B 13/10, F03B 17/06

(54) **SUBMERSIBLE POWER GENERATION PLATFORM**

(30) Priority: 18.03.2015 KR 20150037432
(71) Applicant: Lee, Dong-In, Paju-si, Gyeonggi-do 10860 (KR)
(72) Inventor: Lee, Dong-In, Paju-si, Gyeonggi-do 10860 (KR)
(74) Representative: Zardi, Marco
(86) International application number: PCT/KR2016/001905
(87) International publication number: WO 2016/148412

(57) **Abstract**

Discloses herein a submersible power generation platform. The submersible power generation platform a power generation unit (10) including blades (11) configured to be rotated by flowing water (1) and a generator (13) configured to receive rotational force and to generate electricity; a frame (20) configured to fasten the power generation unit (10) therein so that the blades (11) are disposed toward a front location from the flowing water (1) enters; a pair of buoyant objects (30) configured to be disposed on both sides of the frame (20), and to float the frame (20); and one or more fastening ropes (40) configured to fasten the buoyant objects (30), wherein one end of each of the fastening ropes (40) is coupled to a balance center portion on the outer surface of a corresponding one of the buoyant objects (30) or an upstream portion of the buoyant object (30).

## Description

### Technical Field

The present invention relates to a submersible power generation platform.

### Background Art

General power generation methods for generating electricity include thermal power generation using fossil fuel, hydroelectric power generation using falling water, wind power generation using wind, and nuclear power generation using nuclear fission. These power generation methods have some problems. In the case of thermal power generation, contamination occurs due to the combustion of fossil fuel. Hydroelectric power generation requires the construction of a dam, and thus the ecosystem is destroyed and a massive construction cost must be incurred. Furthermore, in the case of wind power generation, a weather state in which wind blows significantly influences power generation efficiency, and thus it is difficult to continuously supply power. Nuclear power generation requires a considerable cost in order to prepare for radioactive leaks and to process waste.

As a scheme for overcoming these problems, an oceanic current power generation apparatus using an oceanic current was conceived, as disclosed in the patent document of the following prior art document section. Oceanic current power generation is a representative power generation method for converting the kinetic energy of seawater into electrical energy, along with tidal current power generation. Oceanic current power generation and tidal current power generation use the flow of seawater as an energy source, and thus are advantageous in that energy can be continuously and stably generated and power can be stably generated without a change in weather or an environmental problem attributable to the exhaustion of carbon dioxide, radioactive leaks, etc.

Oceanic current power generation and tidal current power generation use blades which are rotated by the flow of seawater. Such blades are classified into vertical axis blades and horizontal axis blades according to their structure. In this case, horizontal axis blades are classified into pile-type blades, seabed-type blades, and floating-type blades. In this case, pile-type blades are blades installed on piles erected on the floor of the ocean, seabed-type blades are blades installed on a large-sized structure disposed on the floor of the ocean, and floating-type blades are blades installed on a structure floating on the surface of seawater.

The above types of blades have problems related to installation, repair, and fastening. More specifically, pile-type blades are disadvantageous in that a considerable installation cost is required and are disadvantageous in that when the blades are installed at a deep water level, flow speed is low and thus power generation efficiency is low. In the case of seabed-type blades, the weight of the large-sized structure is significantly heavy, and thus large-sized equipment, such as a crane, is required to place the structure on a site where the flow of an oceanic current is fast or to take the structure out of the sea in order to repair the structure, work is complex, and high costs are required for the equipment and the repair and maintenance thereof. Meanwhile, in the case of floating-type blades, a floating structure is fixed by a rope. In this case, a problem may occur in that the structure loses its balance due to the buoyancy of the structure, the weight of the structure and the rope, the flow of seawater, or the like. Furthermore, in the early stage of its installation, the lower portions of the blades are submerged in the water, and the upper portions thereof are suspended in the air. In this case, the flow of seawater is concentrated on the lower portions of the blades, and thus the blades are tilted, with the result that it is difficult to install the blades and the possibility of an accident is high. Furthermore, the structure is large, and thus installation and repair cannot be performed without the help of large-sized equipment and a major accident may be caused due to even the slight imbalance between forces. Furthermore, in order to repair the structure disposed in the water, a diver must put on a diving suit and perform submarine work, and thus the efficiency of the work is considerably low and the work is inefficient in terms of the repair cost and the repair time. Moreover, when the blades come into contact with the floor of the ocean for any reason, such as a reduction in buoyancy or a failure, the blades are damaged. In the case were flow speed rapidly becomes high due to a typhoon or the like, evacuation is impossible, and thus damage to the blades is unavoidable.

Accordingly, there is an urgent demand for a scheme for overcoming the problems which occur in the conventional oceanic current and tidal current power generation apparatuses.

### [Prior Art Document]

(Patent document 1) KR2003-0050836 A

### Disclosure

### Technical Problem

The present invention is intended to overcome the above-described problems of the prior art, and a first aspect of the present invention is to provide a submersible power generation platform, in which buoyant objects are disposed on both sides of a frame inside which blades are disposed, and a fastening rope configured to fasten each of the buoyant objects to a water channel is coupled to the balance center portion of the buoyant object determined by considering the balance between forces, thereby maintaining the balance of the power generation platform and thus enabling the power generation platform to stably generate electricity in the water.

Furthermore, a second aspect of the present invention is to provide a submersible power generation platform, in which a rotation drive unit horizontally rotates a frame with respect to buoyant objects, and thus structural stability is implemented by lowering the center of gravity, thereby facilitating installation and repair from the surface of the water and also enabling the power generation platform to be securely evacuated to the floor of a water channel during a disaster.

Furthermore, a third aspect of the present invention is to provide a submersible power generation platform, in which blades are disposed within a flow path penetrating a duct, thereby providing high power generation efficiency and also preventing the blades from being damaged due to a collision with the floor of a water channel.

Furthermore, a fourth aspect of the present invention is to provide a submersible power generation platform, in which a hollow space configured such that air or water selectively enters thereinto and exits therefrom is formed inside a duct or each buoyant object or a winch is disposed, thereby adjusting the location of the power generation platform in the water.

Furthermore, a fifth aspect of the present invention is to provide a submersible power generation platform, in which the lateral shaking of a frame attributable to the flow of flowing water is prevented by disposing a counter weight, thereby enabling the power generation platform to stably generating electricity in the water.

Furthermore, a sixth aspect of the present invention is to provide a submersible power generation platform, in which mechanical seals are disposed in a casing configured to accommodate a generator, drive motor, or winch in a dual manner or a pressure adjustment unit configured to increase internal pressure is disposed, and thus flowing water is prevented from entering into the casing, thereby protecting the generator, drive motor, or winch against flowing water.

Moreover, a seventh aspect of the present invention is to provide a submersible power generation platform, in which any one of fastening ropes coupled to a frame is coupled to a portion of the floor of the ocean on a front side from which seawater enters, and the other fastening rope is coupled to a portion of the floor of the ocean on a back side to which seawater flows, thereby enabling the power generation platform to generate power by means of a tidal current in which the direction of the flow of seawater is reversed.

### Technical Solution

According to an embodiment of the present invention, there is provided a submersible power generation platform, including: a power generation unit including blades configured to be rotated by flowing water and a generator configured to receive the rotational force of the blades and generate electricity; a frame configured to fasten the power generation unit therein so that the blades are disposed toward a front location from which the flowing water enters; a pair of buoyant objects configured to be disposed on both sides of the frame, and to float the frame by means of buoyancy; and one or more fastening ropes configured to fasten the buoyant objects to a water channel, wherein one end of each of the fastening ropes is coupled to a balance center portion on the outer surface of a corresponding one of the buoyant objects, determined by considering the weight and buoyancy of each of the power generation unit, the frame, and the buoyant object, and the flow speed of the flowing water, or an upstream portion of the buoyant object in the direction in which the flowing water enters, in order to maintain balance of the frame; wherein the buoyant object coupled to the fastening rope is selectively lifted and lowered in the water and located at a predetermined water level so that the blades are rotated at a predetermined one of flow speeds which vary with water levels.

Furthermore, in the submersible power generation platform according to an embodiment of the present invention, the power generation unit includes a plurality of power generation units, and the power generation units are disposed in a lateral direction from one side of the frame to the other side thereof or in a vertical direction perpendicular to the lateral direction in at least one row or column.

Furthermore, the submersible power generation platform according to an embodiment of the present invention further includes a duct configured such that a flow path configured to pass the flowing water therethrough is formed therethrough, the power generation unit is fixedly disposed inside the flow path, and the duct guides the flowing water toward the blades.

Furthermore, in the submersible power generation platform according to an embodiment of the present invention, a hollow space is provided inside the duct, and the duct is selectively lifted and lowered in such a manner that air or water selectively enters into and exits from the duct.

Furthermore, the submersible power generation platform according to an embodiment of the present invention further includes a first piping part configured to include a first valve disposed in a first pipe communicating with the inside of the duct and to adjust the amount of air or water entering or exiting via the first pipe.

Furthermore, in the submersible power generation platform according to an embodiment of the present invention, a hollow space is provided inside the buoyant object, and the buoyant object is selectively lifted and lowered in such a manner that air or water selectively enters into and exits from the buoyant object.

Furthermore, the submersible power generation platform according to an embodiment of the present invention further includes a second piping part configured to include a second valve disposed in a second pipe communicating with the inside of the buoyant object and to adjust the amount of air or water entering or exiting via the second pipe.

Furthermore, in the submersible power generation platform according to an embodiment of the present invention, the balance center portion has a width in the direction in which the flowing water enters within a range of 8 to 12% of the length of the buoyant object based on a vertical axis passing through the center of the buoyant object in the lengthwise direction thereof.

Furthermore, in the submersible power generation platform according to an embodiment of the present invention, the submersible power generation platform is disposed in the ocean, a first fastening rope, which is any one of the fastening ropes, connects an upstream portion of the buoyant object to a portion of a floor of the ocean in front of the frame, and a second fastening rope, which is a remaining one of the fastening ropes, connects a back portion of the buoyant object to a portion of the floor of the ocean in back of the frame, thereby enabling the submersible power generation platform to generate power by means of a tidal current in which a flow direction of seawater is reversed.

Furthermore, in the submersible power generation platform according to an embodiment of the present invention, the frame and the buoyant objects are coupled and fastened to each other.

Furthermore, in the submersible power generation platform according to an embodiment of the present invention, the frame is rotated relative to the buoyant objects.

Furthermore, the submersible power generation platform according to an embodiment of the present invention further includes a first rotation drive unit configured to include an actuator for generating rotational force, which is a geared motor or hydraulic device, and to rotate the frame.

Furthermore, the submersible power generation platform according to an embodiment of the present invention further includes a second rotation drive unit configured to include a driving pulley part configured such that first and second pulleys disposed in parallel with each other are coupled to and rotated along with an actuator, which is a geared motor or hydraulic device, and a driven pulley part configured such that third and fourth pulleys disposed in parallel with each other are coupled to one side or both sides of the frame and are rotated by the rotational force of the driving pulley part; wherein when the driving pulley part is rotated in a first rotation direction, which is any one of clockwise and counterclockwise directions, a first rope coupled to the third pulley rotates the driven pulley part in the first rotation direction while being wound around the first pulley; and wherein when the driving pulley part is rotated in a second rotation direction, which is a direction opposite to the first rotation direction, a second rope coupled to the fourth pulley rotates the driven pulley part in the second rotation direction while being wound around the second pulley.

Furthermore, the submersible power generation platform according to an embodiment of the present invention further includes a third rotation drive unit configured to include a link device in which at least two links are coupled through pin coupling, wherein the links are operated by an actuator, which is a geared motor or hydraulic device.

Furthermore, the submersible power generation platform according to an embodiment of the present invention further includes a fourth rotation drive unit configured to include a toothed driving sprocket configured to be coupled to an actuator, which is a geared motor or hydraulic device, and to be axially rotated and a toothed driven sprocket configured to be axially rotatably coupled to one side or both sides of the frame, wherein the driven sprocket is coupled to the driving sprocket via a chain and is rotated.

Furthermore, the submersible power generation platform according to an embodiment of the present invention further includes: a lifting and lowering rope configured to be fixedly coupled to the floor of a water channel; and a winch configured to selectively lift and lower the frame by selectively winding and unwinding the lifting and lowering rope.

Furthermore, the submersible power generation platform according to an embodiment of the present invention further includes: a first balancing rope configured to couple the pair of the buoyant objects or both sides of the frame to each other; and a first counter weight configured to be coupled to the first balancing rope and to maintain the balance between both sides of the frame.

Furthermore, the submersible power generation platform according to an embodiment of the present invention further includes a rotating part leakage prevention mechanical seal in which a mechanical seal is disposed solely or a plurality of mechanical seals is disposed in a complex manner in a first casing configured to accommodate the generator so that the airtightness or liquid tightness of the power transmission shaft configured to transfer the rotational force of the blades is maintained.

Furthermore, the submersible power generation platform according to an embodiment of the present invention further includes a generator pressure adjusting unit configured to prevent the flowing water from entering by increasing pressure inside a first casing configured to accommodate the generator.

Furthermore, the submersible power generation platform according to an embodiment of the present invention further includes a winch leakage prevention mechanical seal in which a mechanical seal is disposed solely or a plurality of mechanical seals is disposed in a complex manner in a third casing configured to accommodate a winch motor so that the airtightness or liquid tightness of a take-up shaft configured to be rotated by the winch motor and thus selectively wind and unwind the lifting and lowering rope is maintained.

Furthermore, the submersible power generation platform according to an embodiment of the present invention further includes a winch pressure adjustment unit configured to prevent the flowing water from entering by increasing pressure inside the third casing configured to accommodate the winch motor which selectively winds and unwinds the lifting and lowering rope by rotating the take-up shaft.

Furthermore, the submersible power generation platform according to an embodiment of the present invention further includes a first pressure sensor configured to be disposed inside at least any one of the first casing configured to accommodate the generator and a second casing configured to accommodate the actuator and to detect internal pressure.

Furthermore, the submersible power generation platform according to an embodiment of the present invention further includes a second pressure sensor configured to be disposed inside the third casing configured to accommodate the winch motor which selectively winds and unwinds the lifting and lowering rope by rotating the take-up shaft and to detect internal pressure.

Furthermore, the submersible power generation platform according to an embodiment of the present invention further includes an anchoring means configured to be formed in a pile or pipe shape and to include a stake portion configured such that one end thereof is stuck and fastened in the floor of a water channel and a coupling portion configured such that an accommodation space configured to be sealed in such a manner that the stake portion is inserted thereinto is formed therein, wherein the stake portion is coupled to the coupling portion when the accommodation space is in a low-pressure state.

Furthermore, the submersible power generation platform according to an embodiment of the present invention further includes: a second balancing rope configured to couple the pair of the buoyant objects or both sides of the frame to each other; a pulley configured to be fixedly disposed on the floor of a water channel; a connection rope configured to be wound around the pulley, wherein one end of the connection rope is coupled to the second balancing rope and the other end of the connection rope is wound in the direction of the frame; and a take-up roll configured to the other end of the connection rope.

The features and advantages of the present invention will become more apparent from the following detailed description based on the accompanying drawings.

Prior to the following description, it is noted that the terms or words used in the present description and the attached claims should not be interpreted as having common and dictionary meanings but should be interpreted as having meanings and concepts corresponding to the technical spirit of the invention based on the principle in which the inventor(s) can appropriately define the concepts of the terms in order to describe the invention in the best way.

### Advantageous Effects

According to the present invention, the buoyant objects are disposed on both sides of the frame inside which the blades are disposed and the fastening rope configured to fasten each of the buoyant objects to a water channel is coupled to the balance center portion of the buoyant object determined by considering the balance between forces, and thus the frame maintains balance in the water and is disposed at an optimum water level in accordance with a variation in flow speed attributable to a water level, thereby providing the effect of enabling the power generation platform to stably generate electricity in the water.

Furthermore, according to the present invention, the rotation drive unit rotates the frame relative to the buoyant objects, and thus the frame disposed vertical to the flow direction of a water channel can be horizontally disposed and the center of gravity is lowered, providing the advantages of enabling installation and repair to be stably performed from the surface of the water and enabling the power generation platform to be securely evacuated to the floor of a water channel during a disaster.

Furthermore, according to the present invention, the blades are disposed within the flow path penetrating the duct, and thus flowing water is guided toward the blades via the flow path in a concentrated manner and the blades are covered with the duct, thereby providing the effect of providing high power generation efficiency and preventing the blades from being damaged due to a collision with the floor of a water channel.

Furthermore, according to the present invention, the hollow space is formed inside the duct or each of the buoyant objects to thus enable buoyancy to be adjusted through the entrance of air or water into the duct or the buoyant object or the winch is disposed to thus wind the lifting and lowering rope fastened to the floor of the ocean, thereby providing the advantage of adjusting the location of the power generation platform in the water.

Furthermore, according to the present invention, the lateral shaking of the frame attributable to the flow of flowing water is prevented by disposing the counter weight, thereby providing the effect of enabling the power generation platform to stably generating electricity in the water.

Furthermore, according to the present invention, the dual mechanical seal formed by disposing mechanical seals in a dual manner is disposed in the casing configured to accommodate the generator, drive motor, or winch in a dual manner or the pressure adjustment unit is disposed to keep interval pressure higher than external pressure, and thus flowing water is prevented from entering into the casing, thereby protecting the generator, drive motor, or winch against flowing water.

Moreover, according to the present invention, any one of the fastening ropes coupled to the frame is coupled to a portion of the floor of the ocean on a front side from which seawater enters and the other fastening rope is coupled to a portion of the floor of the ocean on a back side toward which seawater flows, and thus the frame can be stably and selectively lifted and lowered even when the flow direction of seawater is reversed, thereby providing the advantage of enabling the power generation platform to generate power by means of a tidal current in which the direction of the flow of seawater is reversed.

### Description of Drawings

FIG. 1 is a perspective view of a submersible power generation platform according to a first embodiment of the present invention;
FIGS. 2 to 4 are side views of the submersible power generation platform according to the first embodiment of the present invention;
FIG. 5 is a perspective view of a submersible power generation platform according to a second embodiment of the present invention;
FIG. 6 is a sectional view taken along line A-A' of FIG. 5;
FIG. 7 is a side view of the submersible power generation platform according to the second embodiment of the present invention;
FIGS. 8 to 11 are perspective views of a submersible power generation platform according to a third embodiment of the present invention;
FIGS. 12a to 12c are perspective views of a submersible power generation platform according to a fourth embodiment of the present invention;
FIG. 13 is a perspective view of a submersible power generation platform according to a fifth embodiment of the present invention;
FIG. 14 is a sectional view of the power generation unit shown in FIG. 1; and
FIGS. 15 and 16 are sectional views of the anchoring means shown in FIG. 3.

### Best Mode

The objects, specific advantages and novel features of the present invention will become more apparent from the following detailed description and preferred embodiments taken in conjunction with the accompanying drawings. It should be noted that when reference symbols are assigned to components in the present specification, the same reference symbols are assigned to the same components as much as possible even when the same components are shown in different drawings. Furthermore, the terms "first," "second," etc. are each used to distinguish one component from another component, and components are not limited by the terms. In the following description of the present invention, a detailed description of a related well-known technology which may make the gist of the present invention obscure will be omitted.

Preferred embodiments of the present invention will be described in detail below with reference to the accompanying drawings.

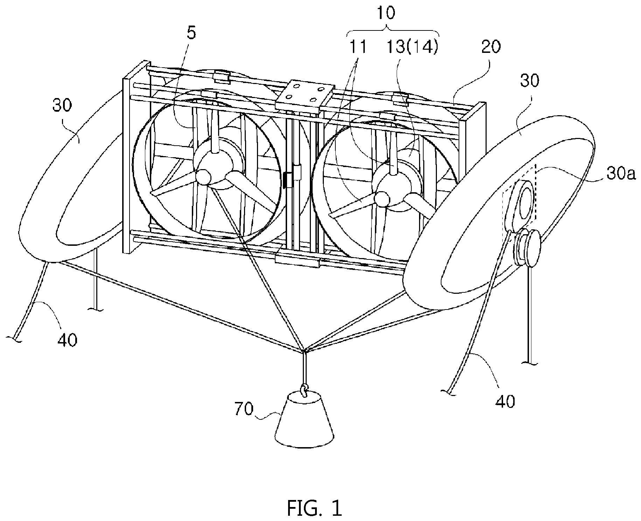

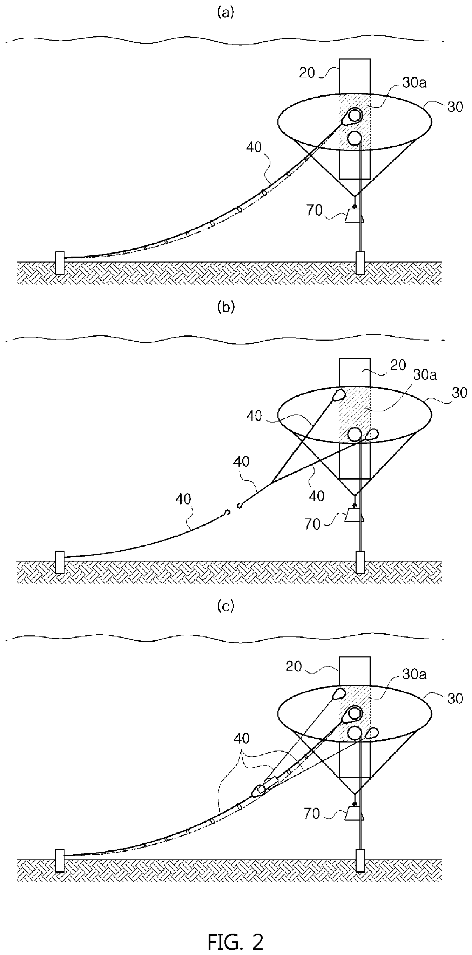

FIG. 1 is a perspective view of a submersible power generation platform according to a first embodiment of the present invention, and FIGS. 2 to 4 are side views of the submersible power generation platform according to the first embodiment of the present invention.

As shown in FIGS. 1 to 3, the submersible power generation platform according to the first embodiment of the present invention includes: one or more power generation units 10 each including blades 11 configured to be rotated by flowing water 1 and a generator 13 configured to receive the rotational force of the blades 11 and to generate electricity; a frame 20 configured to fasten the power generation units 10 therein so that the blades 11 are disposed toward a front location from the flowing water 1 enters; a pair of buoyant objects 30 configured to be disposed on both sides of the frame 20, and to float the frame 20 by means of buoyancy; and one or more fastening ropes 40 configured to fasten the buoyant objects 30 to a water channel, wherein one end of each of the fastening ropes 40 is coupled to a balance center portion on the outer surface of a corresponding one of the buoyant objects 30, determined by considering the weight and buoyancy of each of the power generation units 10, the frame 20, and the buoyant objects 30, and the flow speed of the flowing water, or an upstream portion of the buoyant object 30 in the direction in which the flowing water enters, in order to maintain the balance of the frame 20. In the submersible power generation platform, the buoyant object 30 coupled to the fastening rope 40 is selectively lifted and lowered in the water and located at a predetermined water level so that the blades 11 can be rotated at a predetermined one of flow speeds which vary with water levels.

The submersible power generation platform according to the present invention is a power generation apparatus for generating electricity by using the flowing water 1 flowing through a water channel, and includes the power generation units 10, the frame 20, the buoyant objects 30, and the fastening ropes 40.

In this case, the flowing water 1 refers to water which is flowing, and includes not only flowing water in a river and flowing water in a stream but also flowing seawater. In this case, the flows of seawater include an oceanic current and a tidal current. In this case, an oceanic current refers to the flow of seawater which flows in a predetermined direction, while a tidal current refers to the movement of seawater whose flow direction is changed by 180 degrees according to a tidal phenomenon. Accordingly, the water channel through which the flowing water 1 flows may be a predetermined topographical site which constitutes part of a river or a stream, or may be the ocean in which seawater flows.

As a result, the submersible power generation platform according to the present invention is disposed in a river, a stream or the ocean, and generates electricity by using the flowing water 1. This electricity is generated in the power generation units 10 in which the blades 11 are rotated.

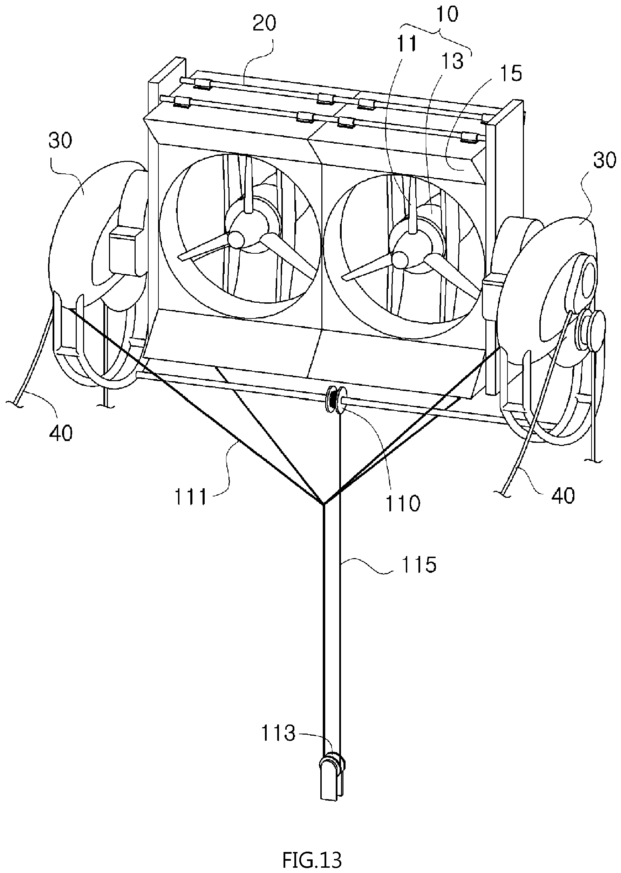

In this case, the power generation units 10 are devices for generating electricity, and each include the blades 11 and the generator 13. The blades 11 are rotatable blades, and are rotated by the flowing water 1. The blades 11 may include at least two blades which are disposed radially from a central hub so that moments attributable to rotation cancel each other. The rotational force of the blades 11 is finally transferred to the generator 13, and the generator 13 converts the rotational energy of the blades 11 into electrical energy. This generator 13 is disposed inside a first casing 14 (see FIG. 13). Meanwhile, power generation systems are classified into indirect power transmission-type systems in which a hydraulic pump and a hydraulic generator are coupled to each other, and direct power transmission-type systems in which a gearbox and a generator are directly coupled to each other. Accordingly, the first casing 14 accommodates a gearbox, a brake and a hydraulic pump, or a hydraulic pump, a hydraulic generator and a brake depending on the type of power generation system. Meanwhile, the rotational force of the blades 11 may be transferred directly to the generator 13, or may be transferred to the generator 13 by way of the hydraulic pump.

Meanwhile, when the rotational force of the blades 11 is transferred by way of the hydraulic pump, the rotational force of the blades 11 is converted into a power source used to operate the generator 13 in the hydraulic pump and then transferred to the generator 13, and thus energy loss in an energy conversion process is unavoidable. This energy loss is at least 50%, and thus it is preferred that the rotational force of the blades 11 is transferred directly to the generator 13 in terms of energy efficiency. In this case, the rotation of the blades 11 rotates the generator 13 by way of a gearbox device including a transmission, in which case the rotational force is maintained through low-speed gear shifting when the rotation speed of the blades 11 becomes low.

However, the submersible power generation platform according to the present invention does not necessarily transfer the rotational force of the blades 11 directly to the generator 13, and may transfer the rotational force by way of a hydraulic pump. The reason for this is that when a hydraulic pump is included, a transmission and the generator 13 are not contained in the blades 11, and thus the structure becomes simple. Meanwhile, when a hydraulic variation is large, a transmission may be installed between the hydraulic pump and the generator 13. The power generation units 10 each including the above-described blades 11 and generator 13 are disposed and fastened inside the frame 20.

The frame 20 is a structure which fastens the power generation units 10. In this case, the power generation units 10 are fastened inside the frame 20 so that the blades 11 are disposed toward a front location from which the flowing water 1 enters. In this case, the one or more power generation units 10 may include a plurality of power generation units which are disposed in a lateral or vertical direction in at least one row or column. In this case, the lateral direction refers to a direction from one side of the frame 20 to the other side thereof, i.e., a left-to-right direction, and the vertical direction refers to a direction vertical to the lateral direction, i.e., a top-to-bottom direction. Accordingly, the submersible power generation platform according to the present invention may be configured such that a plurality of power generation units 10 are disposed in a plurality of rows or columns, thereby enabling a super-sized power generation system having massive power generation capacity to be constructed. Furthermore, in this case, the individual power generation units 10 can be independently operated, so that power generation facilities can be flexibly operated, and so that even when part of the power generation units 10 fails, power can be stably generated using another power generation unit 10. Meanwhile, the groups of blades 11 of the power generation units 10 which are disposed on left and right sides symmetrically with respect to the front center of the frame 20 may be rotated in different directions. For example, a pair of power generation units 10 in which the rotation direction of the blades 11 are opposite are symmetrically disposed on the left and right sides of the frame 20. In this case, the torques generated by the rotation of the blades 11 cancel each other, and thus the frame 20 is not rotated and remains balanced. In the same manner, a two or even number of power generation units 10 may be disposed in a plurality of pairs. However, the number of power generation units 10 is not necessarily an even number. Furthermore, when the power generation unit 10 of the blades 11 which are rotated in a clockwise direction fails, the blades 11 of the power generation unit 10 symmetrically disposed, which are rotated in a counterclockwise direction, are stopped by the brake in order to maintain balance. In this case, balance may be maintained by means of a counter weight to be described later.

Meanwhile, the frame 20 includes a horizontal frame disposed in a lateral direction or a vertical frame disposed in a vertical direction. Accordingly, the frame 20 may be composed of a horizontal frame or a vertical frame, or may be formed in a truss structure in which at least one horizontal frame and at least one vertical frame are combined with each other. Meanwhile, the power generation units 10 may be fastened to the frame 20 by means of ribs 5. The ribs 5 are plate-shaped members having a predetermined length. However, the power generation unit 10 is not necessarily fastened by the ribs 5, but may be fastened by means of other well-known members. The frame 20 in which the power generation units 10 have been disposed as described above floats in the water by means of the buoyant objects 30.

In this case, the buoyant objects 30 are configured to float by means of buoyancy, are disposed on both sides of the frame 20, and float the frame 20. In this case, one end of each of the buoyant objects 30 may be formed in a streamlined shape in order to minimize resistance against the flowing water 1. In this case, the one end of each of the buoyant objects 30 refers to a distal end of each of the buoyant objects 30 in a direction in which the flowing water 1 enters. Based on the same principle, the other end of each of the buoyant objects 30 may be formed in a streamlined shape in order to prepare for a case where the direction of the flowing water 1 is changed by 180 degrees. Furthermore, the buoyant objects 30 are selectively raised and lowered in the water, and thus the upper and lower ends of each of the buoyant objects 30 may be formed in a streamlined shape. However, the one, other, upper or lower end of each of the buoyant objects 30 is not necessarily formed in a streamlined shape. The size and shape of each of the buoyant objects 30 are determined by considering factors, such as resistance against the flowing water 1, and the weight and buoyancy of each of the frame 20, the power generation units 10, and the buoyant objects 30.

The buoyant objects 30 are disposed on both sides of the frame 20, i.e., on the left and right sides thereof. More specifically, when vertical frames are disposed on both sides of the frame 20, the buoyant objects 30 are connected to the vertical frames. When the frame 20 is composed of only a horizontal frame, the buoyant objects 30 are coupled to both ends of the horizontal frame. Meanwhile, the buoyant objects 30 have a predetermined size. In this case, one end or the other end of each of the buoyant objects 30 laterally protrudes from a corresponding side of the frame 20, thereby preventing the frame 20 from being tilted forward or backward. However, one or the other end of each of the buoyant objects 30 does not necessarily need to protrude. The buoyant objects 30 are fastened to the water channel by the fastening ropes 40.

The fastening ropes 40 are ropes for fixedly fastening the buoyant objects 30 to a water channel. These fastening ropes 40 fasten the buoyant objects 30 which are drifted by the flowing water 1, and thus a considerable amount of tension is applied to the fastening ropes 40. Accordingly, the fastening ropes 40 may be wire ropes. However, the fastening ropes 40 are not necessarily limited to the wire ropes, but may be made of any material as long as the material can hold the buoyant objects 30. One end of each of the fastening ropes 40 is coupled to the balance center portion 30a of a corresponding one of the buoyant objects 30. The unstable flow of the flowing water 1, such as a vortex, generates the shaking of the frame 20. The balance center portion 30a is a specific portion on the outer surface of each of the buoyant objects 30 which is used to prevent the frame 20 from shaking and maintain balance. The balance center portion 30a is determined by considering the weight and buoyancy of each of the power generation units 10, the frame 20, and the buoyant objects 30 and the flow speed of the flowing water 1 in order to allow the balance of the frame 20 to be maintained in the water. More specifically, the portion whose width in a direction in the flowing water 1 enters based on a vertical axis passing through the center of the buoyant object 30 in the lengthwise direction thereof falls within the range of 8 to 12% of the length of the buoyant object 30 may be the balance center portion 30a. In this case, the center of the buoyant object 30 in the lengthwise direction thereof refers to the center of the lateral length of the buoyant object 30. Accordingly, the balance center portion 30a may deviate from the center of the buoyant object 30 in the direction in which the flowing water 1 enters, i.e., the balance center portion 30a may deviate to one end of the buoyant object 30. In this case, the center of gravity of the submersible power generation platform according to the present invention is close to the collision point where the flowing water 1 collides and one end of the buoyant object 30 is fastened, with the result that the shaking of one end of the buoyant object 30 by the flowing water 1 is prevented. As a result, the occurrence of turbulence is minimized, the balance center portion 30a is the portion where the center of gravity and the center of buoyancy are not deconstructed, and thus the shaking of the frame 20 attributable to a vortex is prevented. However, the balance center portion 30a does not necessarily need to have the width within the range of 8 to 12% of the length of the buoyant object 30. For example, the balance center portion 30a may have a predetermined width on the left and right sides of the vertical axis passing through the center of the buoyant objects 30 in the lengthwise direction thereof. In other words, the balance center portion 30a may be determined to be a portion different from the above-described portions by considering the above-described various factors in an integrated manner. Meanwhile, in view of a variation in flow speed attributable to the water level, the fastening ropes 40 may be coupled to a point below a horizontal axis passing through the center of the buoyant object 30. The reason for this is that larger external force is exerted on the upper end of the frame 20 because the flow speed increases in proportion to the water level.

Meanwhile, a single fastening rope 40 may be coupled to the balance center portion 30a (see FIG. 2(a)), a plurality of fastening ropes 40 may be coupled to each other, or a plurality of fastening ropes 40 may be coupled to different points on the balance center portion 30a. For example, two-point support is possible, i.e., two fastening ropes 40 may be coupled to the balance center portion 30a. In this case, the two fastening ropes 40 may be coupled to the upper and lower ends of the balance center portion 30a based on the lateral center line thereof (see FIG. 2(b)). By coupling the fastening ropes 40 as described above, the buoyant objects 30 are prevented from being rotated. Furthermore, three-point support is also possible. In this case, the point at which any fastening rope 40 is coupled to the balance center portion 30a may include left and right points near the lateral center line of the balance center portion 30a or points near the upper and lower ends of the center line. In this case, the fastening rope 40 which is coupled to the points near the upper and lower ends may include different fastening ropes 40, or may be the same fastening rope 40. When the same fastening rope 40 is coupled to the points near the upper and lower ends, one end of the fastening rope 40 is coupled to the point near the upper end of the balance center portion 30a, and the other end thereof is coupled to the point near the lower end of the balance center portion 30a by way of a pulley (see FIG. 2(c)). However, the fastening rope 40 does not necessarily need to be coupled using the above-described method.

Furthermore, any one fastening rope 40 may be coupled to the buoyant object 30, another fastening rope 40 may be coupled to a water channel, and the two fastening ropes 40 may be coupled to each other. In this case, hooks may be attached to the respective fastening ropes 40, and then the fastening ropes 40 may be easily coupled to each other (see FIG. 2(b)). According to this method, the submersible power generation platform according to the present invention can be easily fastened. The reason for this is that the fastening rope 40 coupled to the submersible power generation platform floating on the water and the fastening rope 40 coupled to the water channel can be coupled to each other on a barge or ship.

The submersible power generation platform according to the present invention may be designed based on surface layer flow speed. In this case, all forces applied to the submersible power generation platform according to the present invention can be balanced by coupling the fastening ropes 40 to the balance center portions 30a of the buoyant objects 30. Due to this balance between the forces, the submersible power generation platform according to the present invention can remain balanced in the water. In this case, the forces applied to the submersible power generation platform according to the present invention are its own weight, buoyancy, and external force attributable to the flowing water 1.

Meanwhile, the submersible power generation platform according to the present invention is selectively lifted and lowered in the water so that the blades 11 can be rotated at a predetermined flow speed. The flow speed is motive power which is used to rotate the blades 11. Accordingly, when the flow speed is excessively high, the blades 11 are rotated at a high speed, and thus overload is imposed on the power generation units 10. In contrast, when the flow speed is excessively low, power generation capacity is decreased. Accordingly, for uniform power generation, the blades 11 need to be rotated at a predetermined flow speed in accordance with designed power generation capacity. The submersible power generation platform according to the present invention is lifted or lowered depending on the flow speed, is located at the location where optimum flow speed is present, and then stably generates power. This process will be more specifically described below.

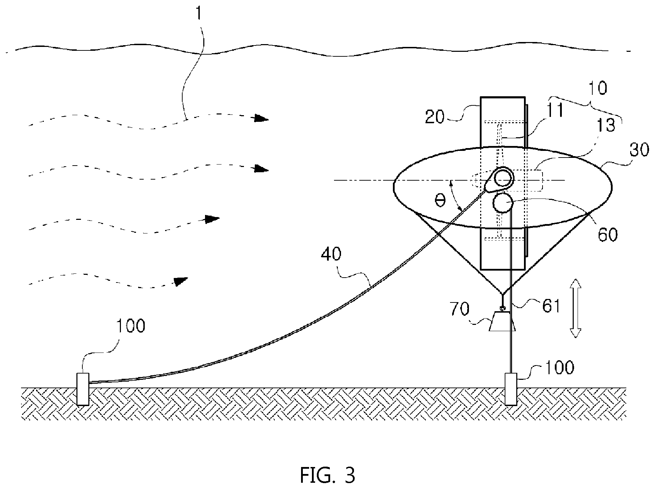

When external force attributable to the flowing water 1 is applied, the submersible power generation platform according to the present invention drifts in a direction toward the back of the frame 20 through which the flowing water 1 exits. In this case, tension is applied to the fastening ropes 40, and the vectors of forces are formed around points where the fastening ropes 40 are coupled to the buoyant objects 30. As the vectors of the forces are balanced, the submersible power generation platform according to the present invention is located at a predetermined water level. More specifically, when the flow speed becomes higher, the external force attributable to flowing water 1 increases. In this case, the external force attributable to flowing water 1 is balanced with the tension of the fastening ropes 40 distributed in the direction of the external force. In other words, the external force attributable to flowing water 1 is equal to a value obtained by multiplying the tension by cosθ. In this case, θ is an angle formed between the direction of the flowing water 1 and the fastening rope 40 (see FIG. 3). Accordingly, when the flow speed becomes higher and thus the external force attributable to the flowing water 1 increases, the angle formed between the direction of the flowing water 1 and the fastening rope 40 becomes smaller, with the result that the submersible power generation platform according to the present invention is lowered. Based on the same principle, when the flow speed becomes lower, the submersible power generation platform according to the present invention is lifted. Accordingly, the submersible power generation platform according to the present invention is lifted or raised depending on the flow speed in the water where the flow speed varies with the water level. When the submersible power generation platform encounters a normal flow speed, it is not lifted or lowered any longer and disposed at a predetermined location.

Meanwhile, the submersible power generation platform according to the present invention may be disposed in the ocean, and may perform oceanic current power generation or tidal current power generation.

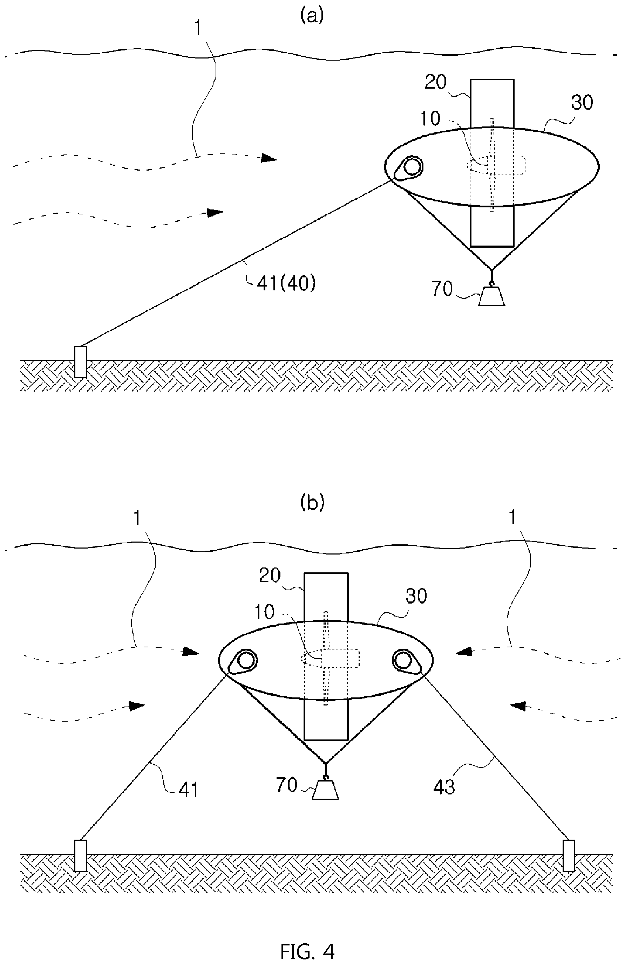

More specifically, As shown in FIG. 4(a), the submersible power generation platform according to the present invention may be disposed in the ocean, one end of a first fastening rope 41, i.e., any one of the fastening ropes 40, may be coupled to an upstream portion of the buoyant object 30, and the other end thereof may be coupled to the floor of the ocean in front of the frame 20. In this case, the upstream of the buoyant object 30 refers to a portion of the outer surface of the buoyant object 30 on the side from which the flowing water 1 enters. In this case, seawater enters from the front of the frame 20, and thus the submersible power generation platform according to the present invention can generate electricity by means of an oceanic current.

As shown in FIG. 4(b), one end of the first fastening rope 41 and one end of another second fastening rope 43 may be coupled to the back portion of the buoyant object 30 and the other end of the first fastening rope 41 and the other end of the second fastening rope 43 may be coupled to the floor of the ocean in back of the frame 20 so that the submersible power generation platform according to the present invention can generate power by means of a tidal current. In this case, the back portion of the buoyant object 30 refers to a portion opposite to the upstream of the buoyant object 30. In this case, according to the ebb and flow of the tidal current, seawater flows from the front of the frame 20, and is reversed by 180 degrees and flows from the back of the frame 20 after six hours. In this case, the first fastening rope 41 and the second fastening rope 43 hold the submersible power generation platform according to the present invention on the front and back portions of the frame 20, and thus can stably generate power by means of the tidal current in which the flow direction of seawater is changed.

### Mode for Invention

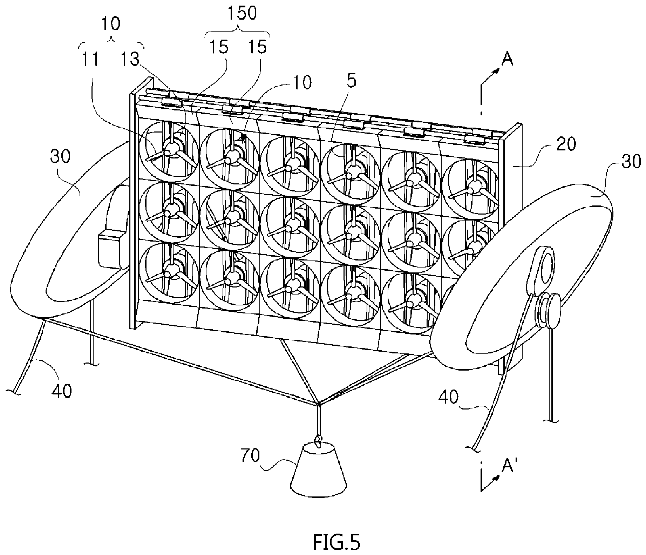

FIG. 5 is a perspective view of a submersible power generation platform according to a second embodiment of the present invention.

As shown in FIG. 5, the submersible power generation platform according to the second embodiment of the present invention may include ducts 15 in order to increase power generation efficiency and protect blades 11. In this case, each of the ducts 15 is a path through which flowing water flows. A flow path is formed to penetrate the center portion of the duct 15, a power generation unit 10 is fixedly disposed inside the flow path, and thus flowing water passing through the flow path is guided to blades 11. The duct 15 concentrates flowing water on the blades 11 by preventing the flowing water from being distributed, low pressure is generated at the back end of the flow path through the flowing water exits, and thus power generation efficiency is increased. Accordingly, the duct 15 and the blades 11 need to be formed in shapes which can ensure maximum flow rate. Furthermore, the duct 15 protects the blades 11 by covering them, and thus prevents the blades 11 from being damaged even when the frame 20 is lowered and comes into contact with the floor of a water channel. Meanwhile, when a plurality of power generation units 10 is present, a plurality of ducts 15 may be disposed accordingly. In this case, the plurality of ducts 15 is welded to each other or combined with each other by screws, and thus forms a duct complex 150. This duct complex 150 functions to combine and support power generation units 10 at a single site, and thus enables a large-capacity power generation system to be constructed.

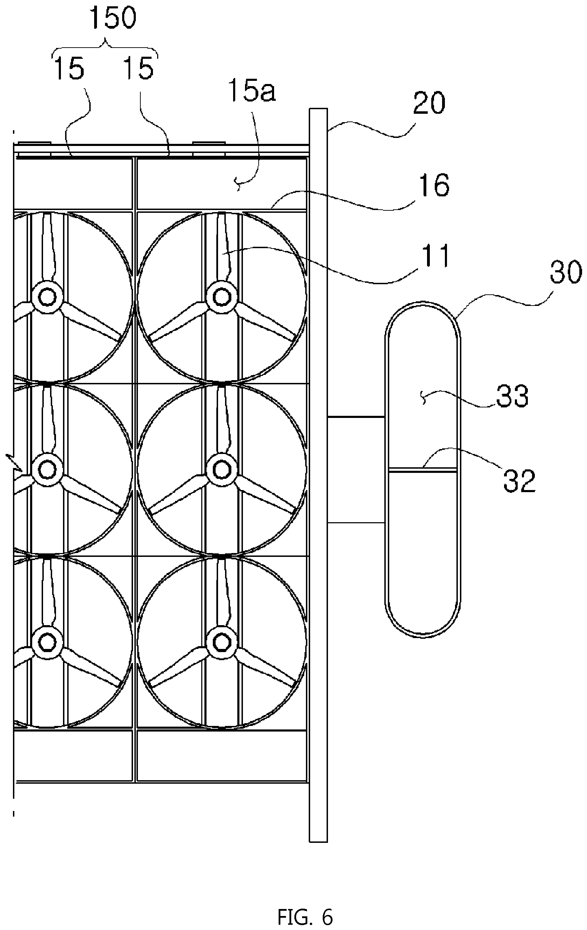

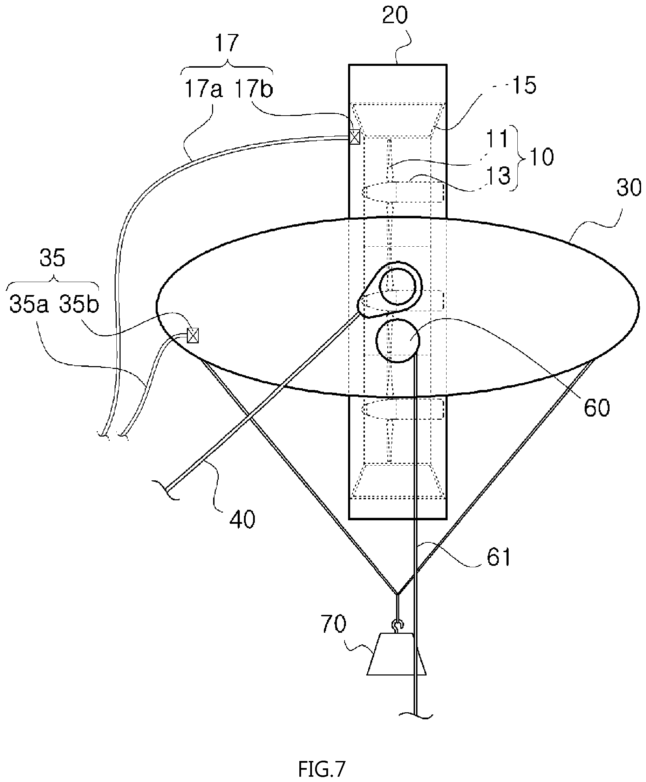

FIG. 6 is a sectional view taken along line A-A' of FIG. 5, and FIG. 7 is a side view of the submersible power generation platform according to the second embodiment of the present invention.

As shown in FIG. 6, a hollow space 15a may be formed inside the duct 15 so that the submersible power generation platform according to the present invention can be selectively lifted and raised in the water. The weight and buoyancy of the submersible power generation platform according to the present invention are adjusted in such a manner that air or water enters into and exits from the hollow space 15a provided inside the duct 15. Accordingly, the submersible platform according to the present invention is disposed at an appropriate design height in the water, and may be lifted in a direction toward the surface of the water for repair or raised in a direction toward the floor of a water channel for the purpose of evacuation. Meanwhile, at least one first partition 16 may be formed inside the duct 15, and thus may form a compartment structure. Air or water is distributed between and stored in small-sized compartments, and thus a load is prevented from being concentrated and imbalance from being caused due to the concentration of a large amount of water on one side. In other words, the water introduced into the duct 15 acts as ballast, while the duct 15 acts as a ballast tank.

Furthermore, a hollow space 33 may be formed inside each buoyant object 30, and at least one second partition 32 may be formed inside the buoyant object 30. Accordingly, air or water may selectively enter into and exit from the buoyant objects 30 and the water is distributed among and stored in compartments, and thus the submersible power generation platform according to the present invention is selectively lifted and lowered and maintains balance.

As shown in FIG. 7, the submersible power generation platform according to the present invention is selectively lifted and raised to a height appropriate for power generation in such a manner that a first piping part 17 is included in the duct complex 150, (see FIGS. 5 and 6), a second piping part 35 is included in the buoyant object 30, or a winch 60 is further included in the buoyant object 30.

The first piping part 17 included in the duct complex 150 is formed by disposing a first valve 17b in a first pipe 17a which communicates with the inside of the duct 15. In this case, the first valve 17b adjusts the amount of air or water entering or exiting via the first pipe 17a, and thus the first piping part 17 adjusts the lifting and lowering of the submersible power generation platform according to the present invention.

Furthermore, the second piping part 35 included in the buoyant object 30 is also formed by disposing a second valve 35b in a second pipe 35a. Accordingly, the second piping part 35 has the same configuration as the above-described first piping part 17, and thus performs the same function.

Furthermore, the submersible power generation platform according to the present invention may further include a lifting and lowering rope 61 and the winch 60. In this case, the lifting and lowering rope 61 is a rope for being fixedly coupled to the floor of a water channel, and the winch 60 is a machine for selectively winding and unwinding the lifting and lowering rope 61 and is operated by a geared motor or hydraulic device. In this case, the winch 60 may be disposed on the frame 20, or may be disposed on each of a pair of buoyant objects 30. When the lateral balance of the frame 20 is considered, the winch 60 is preferably disposed on each of the buoyant objects 30. However, the winch 60 is not necessarily disposed in each of the buoyant objects 30. Since the lifting and lowering rope 61 is wound or unwound depending on the rotation direction of the winch 60, the location of the submersible power generation platform according to the present invention in the water can be freely adjusted. Meanwhile, when the winch 60 is not operated, the submersible power generation platform according to the present invention can be stopped at a desired location by using a brake disposed inside the winch 60.

Accordingly, the submersible power generation platform according to the present invention can be easily lifted and raised by itself without requiring separate equipment, such as a large crane.

Meanwhile, the submersible power generation platform according to the present invention may be constructed in a fixed form in which the frame 20 is coupled and fastened to the buoyant objects 30 and in a rotating form in which the frame 20 is rotated. The submersible power generation platform constructed in the rotating form will be described below.

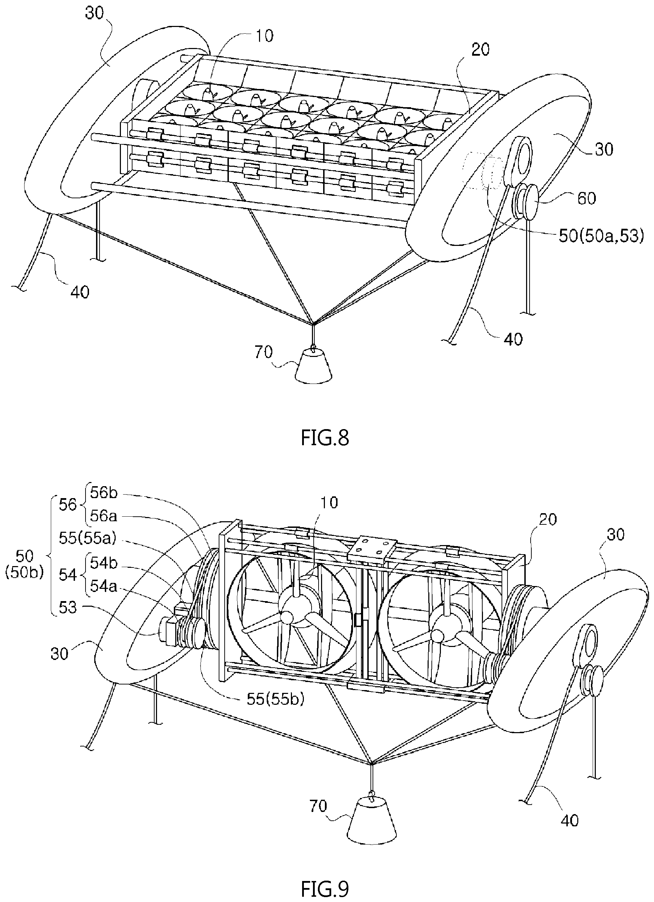

FIGS. 8 to 11 are perspective views of a submersible power generation platform according to a third embodiment of the present invention.

The submersible power generation platform according to the third embodiment of the present invention may further include a rotation drive unit 50 so that a frame 20 is rotated relative to buoyant objects 30. In this case, the rotation drive unit 50 includes an actuator 53 configured to generate rotational force, and the pair of buoyant objects 30 is axially coupled to both sides of the frame 20 by a coupling shaft. Accordingly, the frame 20 is rotated around the coupling shaft by the rotational force of the rotation drive unit 50. In this case, the rotational force of the rotation drive unit 50 may be transferred via direct power transmission using clutch or gear power transmission. In this case, the actuator 53 may be a geared motor or hydraulic device. In the case where the geared motor is used, when a motor having a large reduction ratio is used, the large frame 20 can be rotated by using even a small-capacity geared motor of about 1 kW. Furthermore, a bearing having a small friction coefficient may be attached. For example, a needle bearing is disposed, and can function to fasten the coupling shaft and to rotate the coupling shaft while supporting the coupling shaft's own weight and load applied to the coupling shaft. In this case, a bushing may be disposed on the coupling shaft instead of the bearing.

When the submersible power generation platform according to the present invention is moved or floated on the surface of the water, the rotation drive unit 50 reduces resistance against flowing water and reduces the center of gravity of the frame 20, thereby promoting the stability of the performance of work. More specifically, the frame 20 is disposed perpendicular to the flow direction of flowing water, and thus is subjected to high resistance. In particular, when the flow speed becomes excessively high due to a weather factor, such as a typhoon, a significant impact is applied to the frame 20, and the blades 11 are rotated at a high speed, thereby imposing overload on the power generation units 10. In this case, the submersible power generation platform according to the present invention is lowered to the floor of the ocean in which the flow speed is relatively low and evacuated by using the above-described first piping part 17, second piping part 35 or winch 60 (see FIG. 7). Meanwhile, in a sea area having a low water level, the flow speed is high near the floor of the ocean, in which case the rotation drive unit 50 rotates the frame 20 in parallel with the direction of flowing water, thereby protecting the power generation units 10 disposed inside the frame 20. Furthermore, in the case where the frame 20 is floated on the surface of the water for the purpose of maintaining or repairing the power generation units 10 or the like, when the frame 20 is rotated, the center of gravity is lowered, and thus stability is ensured when the submersible power generation platform according to the present invention is lifted. Furthermore, the front or back portion of the frame 20 is oriented toward the surface of the water depending on the rotation direction of the frame 20, and thus repair is facilitated in either case. Furthermore, when the frame 20 is installed, the lower end of the frame 20 is not disposed in the water and the upper end thereof is not disposed in the air, but the frame 20 is rotated and the front portion or lower portion of the frame 20 is disposed on the surface of the water, thereby providing stability. In particular, in the case of a super-sized power generation system in which a plurality of power generation units 10 is disposed, the center of gravity thereof is located excessively high and thus instability is increased, with the result that the employment of the above-described rotation technology is significantly effective. In this case, the rotation drive unit 50 needs to be operated in the water. The reason for this is that if the upper end of the frame 20 is disposed in the air when the rotation drive unit 50 is operated, the flow speed is concentrated on the lower end of the frame 20 in the water, and thus the frame 20 may lose balance. Meanwhile, ribs 5 configured to fasten the power generation units 10 to the frame 20 may be disposed perpendicularly. In other words, the ribs 5 are disposed perpendicular to the coupling shaft coupling the frame 20 and the buoyant objects 30 (see FIG. 1 or 5). Accordingly, when the frame 20 is rotated, resistance is minimized.

The rotation drive unit 50 may be constructed in various forms, which will be more specifically described below.

First, As shown in FIG. 8, a first rotation drive unit 50a configured to rotate a frame 20 may rotate the frame 20 by transferring the rotational force of an actuator 53 to the frame 20 without change. In other words, the rotational force generated by the actuator 53 is transferred to the frame 20 via a shaft 51 without change.

As shown in FIG. 9, another type of second rotation drive unit 50b configured to rotate a frame may include a driving pulley part 54, and a driven pulley part 56. In this case, the driving pulley part 54 includes a first pulley 54a and a second pulley 54b which are disposed in parallel with each other and axially rotated. The driven pulley part 56 includes a third pulley 56a and a fourth pulley 56b which are disposed in parallel with each other and axially rotated. In this case, the driving pulley part 54 is coupled to an actuator 53, and the driven pulley part 56 is coupled to one side or both sides of the frame 20. The driving pulley part 54 and the driven pulley part 56 are coupled to each other by a rope 55. More specifically, the first pulley 54a and the third pulley 56a are coupled to each other by a first rope 55a, and the second pulley 54b and the fourth pulley 56b are coupled to each other by a second rope 55b. In this case, when the driving pulley part 54 is rotated in a first rotation direction, the first rope 55a is wound around the first pulley 54a, and rotates the driven pulley part 56 in the first rotation direction. In this case, the first rotation direction refers to any one of a clockwise direction and a counterclockwise direction. In contrast, when the driving pulley part 54 is rotated in a second rotation direction, the second rope 55b is wound around the second pulley 54b, and rotates the driven pulley part 56 in the second rotation direction. In this case, the second rotation refers to the direction opposite to the first rotation direction. In other words, when the driving pulley part 54 is rotated in the first rotation direction, the first rope 55a is wound around the first pulley 56a and transfers rotational force to the third pulley 56a, and thus the driven pulley part 56 is rotated in the first rotation direction. In this case, the second rope 55b is wound around the fourth pulley 56b by the rotation of the driven pulley part 56. In contrast, when the driving pulley part 54 is rotated in the second rotation direction, the second rope 55b is wound around the second pulley 54b and rotates the driven pulley part 56 in the second rotation direction. The first rope 55a is wound around the third pulley 56a by the rotation of the driven pulley part 56.

As a result, when the actuator rotates the rotation shaft of the driving pulley part 54, rotational force is transferred to the driven pulley part 56 by the rope 55, is transferred to the frame 20 via the rotation shaft of the driven pulley part 56, and rotates the frame 20 by a desired angle. In this case, the rope 55 can easily transfer force even when large tensile force is imposed thereon by transferred rotational force. In this case, although a belt may be used instead of the rope 55, the belt may slip on the driving pulley part 54 or driven pulley part 56, and thus cannot smoothly transfer force.

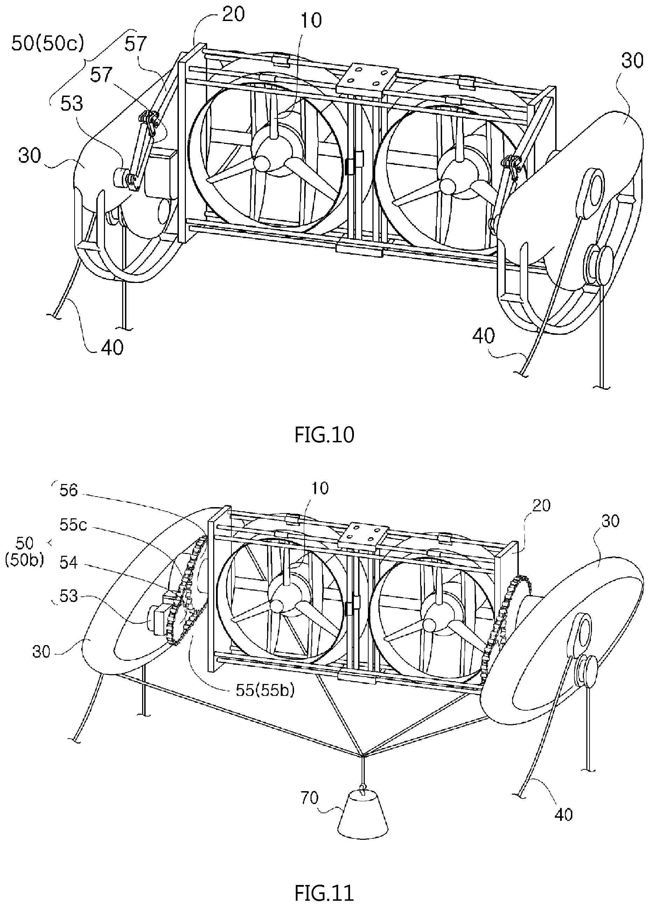

As shown in FIG. 10, still another type of third rotation drive unit 50c configured to rotate a frame 20 may use a link device. In this case, the link device is configured such that at least two links 57 are coupled to each other through pin coupling. The actuator 53 rotates the frame 20 by selectively pulling and pushing any one of the links 57.

As shown in FIG. 11, yet another type of fourth rotation drive unit 50d configured to rotate a frame 20 may include a driving sprocket 58 and a driven sprocket 59. In this case, the driving sprocket 58 and the driven sprocket 59 are toothed sprockets. The driving sprocket 58 is rotated by an actuator 53. The driven sprocket 59 is connected to the driving sprocket 58 by a chain 55c, and is rotated by the rotational force of the driving sprocket 58. In this case, the driven sprocket 59 is axially rotatably coupled to one side or both sides of the frame 20, with the result that the frame 20 is rotated by the rotation of the driving sprocket 58.

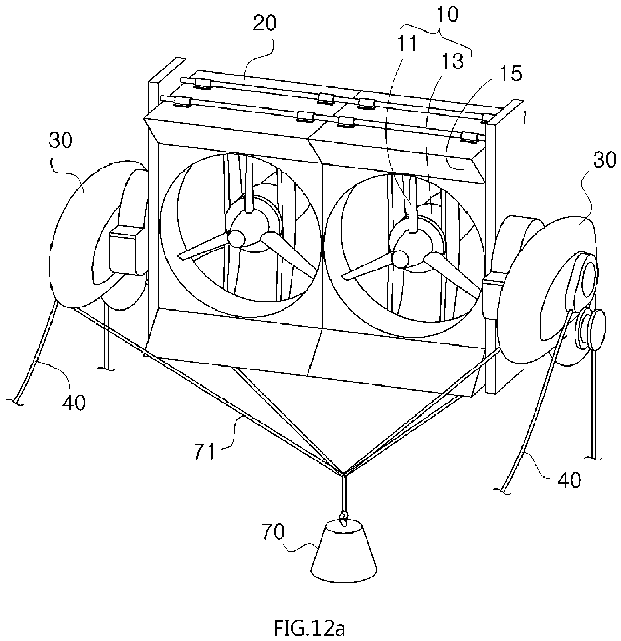

FIGS. 12a to 12c are perspective views of a submersible power generation platform according to a fourth embodiment of the present invention.

The submersible power generation platform according to the fourth embodiment of the present invention may include a lateral balance system in order to maintain lateral balance. In this case, the lateral balance system may be implemented using counter weights having various shapes.

As to a first shape, as shown in FIG. 12a, a first counter weight 70 may be coupled to a first balancing rope 71 connecting a pair of buoyant objects 30 or both sides of a frame 20, and may maintain balance between both sides of the frame 20. More specifically, when the first balancing rope 71 is formed in a "Y" shape, the ends of the three branches are coupled to the pair of buoyant objects 30 or both sides of the frame 20 and the first counter weight 70, respectively. In this case, when the frame 20 is tilted to any one side, the frame 20 is immediately restored by the first counter weight 70, and thus maintains balance. This is based on the principle in which when the frame 20 is tilted and thus the left side thereof is lifted above the right side thereof, the load of the first counter weight 70 is concentrated on the portion of the fastening rope 40 coupled to the left side of the frame 20. Meanwhile, a quadrangular pyramid-shaped first balancing rope 71 in which "Y" shapes may be combined with each other in a dual form may be coupled to four points of the buoyant objects 30 or frame 20, and may be then used. In this case, the first counter weight 70 is coupled to the vertex of a quadrangular pyramid, and thus omnidirectional balance can be maintained. Furthermore, in this manner, balance in various directions may be maintained using polypyramid-shaped first balancing ropes 71.

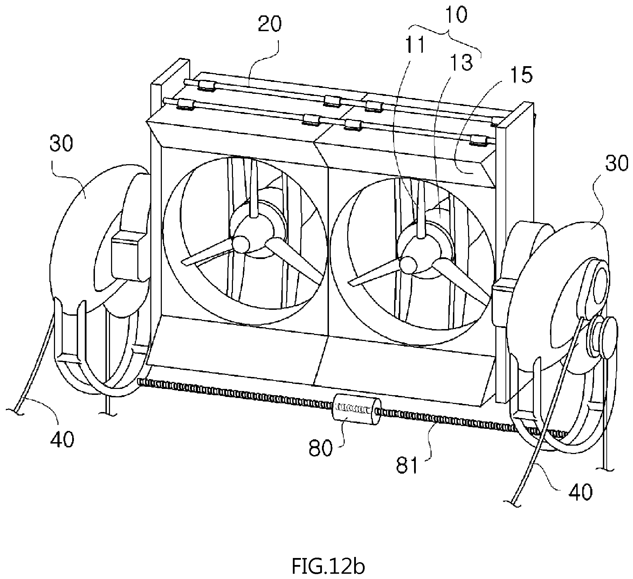

As to a second shape, as shown in FIG. 12b, a second counter weight 80 may be screwed over a screw rod 81, and may maintain balance between both sides of a frame 20 while moving laterally. In this case, the screw rod 81 is formed in a rod shape whose outer surface is provided with screw threads, and is disposed in a direction from one side of the frame 20 to the other side thereof, i.e., in a lateral direction. The second counter weight 80 is screwed over the screw rod 81, and thus the second counter weight 80 maintains the lateral balance of the frame 20 while moving laterally while being rotated. More specifically, when the second counter weight 80 is moved in a lifted direction, restoration to an original state is performed by the load of the second counter weight 80.

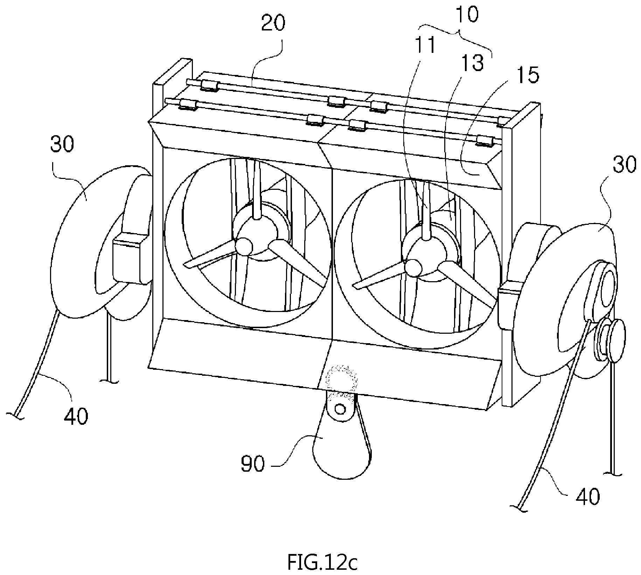

As to a third shape, as shown in FIG. 12c, a third counter weight 90 can maintain balance between both sides of a frame 20 while being rotated. In this case, the third counter weight 90 is rotatably coupled to a duct 15 or the frame 20. The third counter weight 90 may be coupled to both the outside and inside of the duct 15 or frame 20. Meanwhile, force is transferred to the third counter weight 90 by gears, and thus the third counter weight 90 is rotated. When the frame 20 is tilted to a left or right side, the rotation may be performed by a motor or the like.

FIG. 13 is a perspective view of a submersible power generation platform according to a fifth embodiment of the present invention.

As shown in FIG. 13, the submersible power generation platform according to the fifth embodiment of the present invention may further include a second balancing rope 111, pulley 113, a connection rope 115, and a take-up roll 110 in order to enable lifting and lowering in the water and the maintenance of lateral balance. In this case, the second balancing rope 111 is a rope for connecting a pair of buoyant objects 30 or both sides of a frame 20 to each other. One end of the connection rope 115 is coupled to the center portion of the second balancing rope 111, and the other end thereof is wound by the take-up roll 110. In this case, the take-up roll 110 is disposed adjacent to the frame 20. The pulley 113 is fixedly disposed on the floor of a water channel, the connection rope 115 is wound around the pulley 113, and the other end of the connection rope 115 is connected to the take-up roll 110. The take-up roll 110 is a device for selectively winding and unwinding a rope, such as a winch. Accordingly, in a state in which the take-up roll 110 is stopped, the second balancing rope 111 and the connection rope 115 formed in a "Y" shape maintain the lateral balance of the frame 20. When the take-up roll 110 is rotated, the submersible power generation platform according to the present invention is lifted or lowered according to the rotation direction of the take-up roll 110. Meanwhile, the submersible power generation platform according to the present invention may be equipped with a airtightness maintenance system, which will be described below.

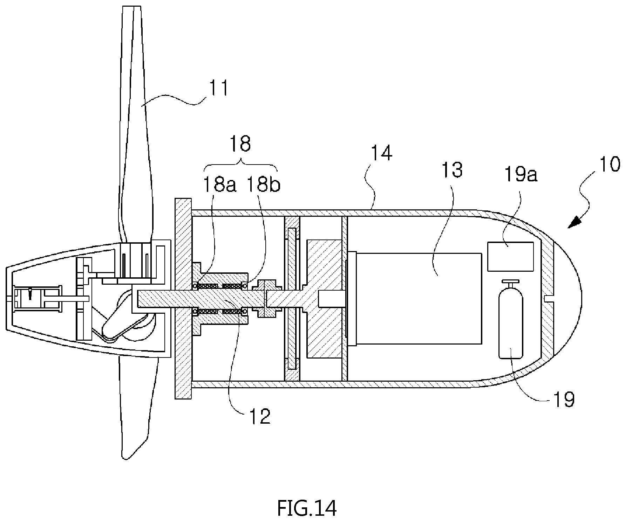

FIG. 14 is a sectional view of the power generation unit shown in FIG. 1.

As shown in FIG. 14, the power generation unit 10 of the submersible power generation platform according to the present invention may further include a rotating part leakage prevention mechanical seal 18 in order to maintain airtightness and liquid tightness. In this case, the rotating part leakage prevention mechanical seal 18 is formed by disposing at least one mechanical seal inside the first casing 14 accommodating the generator 13. In this case, the mechanical seal mechanical seal is a shaft seal device for preventing a fluid from leaking from a rotating shaft portion. More specifically, the mechanical seal prevents a fluid from leaking in such a manner that two precisely finished metallic surfaces are brought into pressure contact with each other by a spring or the like, one of them is fixed and the other thereof is rotated along with a rotating shaft in the state of being in sliding contact with each other. The mechanical seal is advantageous in that the life span thereof is long, the fraction loss thereof is low, and sealing is continuously maintained by the tension of the mounted spring. The rotating part leakage prevention mechanical seal 18 may include a single mechanical seal disposed solely, or two or more seals disposed in a multiplex manner. For example, the rotating part leakage prevention mechanical seal 18 may include a first mechanical seal 18a and a second mechanical seal 18b disposed in a dual manner. However, the mechanical seal is not necessarily disposed in a dual manner. A single mechanical seal may be disposed solely, or a plurality of seals may be disposed in a multiplex manner. The rotating part leakage prevention mechanical seal 18 can maintain the airtightness or liquid tightness of the power transmission shaft 12 configured to transfer the rotational force of the blades 11 for a long period without replacement. As a result, the rotating part leakage prevention mechanical seal 18 prevents the inflow of flowing water which enters into the first casing 14, is evaporated and causes serious corrosion to an inner part, thereby protecting the power generation unit 10. Furthermore, in the case where the rotating part leakage prevention mechanical seal 18 includes mechanical seals disposed in a multiplex manner, even when any one of mechanical seals is damaged, another mechanical seal can maintain airtightness.

Furthermore, the power generation unit 10 of the submersible power generation platform according to the present invention may include a generator pressure adjusting unit 19 configured to increase pressure inside the first casing 14. The generator pressure adjusting unit 19 includes a high-pressure hose or high-pressure tank, and thus keeps pressure inside the first casing 14 higher than that in the water by injecting high-pressure gas into the first casing 14. The difference in pressure between the inside and outside of the first casing 14, which is generated as described above, prevents external water from flowing into the first casing 14. In this case, the high-pressure gas may be, for example, nitrogen, but is not limited thereto.

Meanwhile, high-pressure gas inside the first casing 14 may leak to the outside. A pressure sensor 19a detects pressure inside the first casing 14, and may disseminate the situation to the outside when the detected pressure is lower than a set pressure. Accordingly, repair may be performed before submergence.

Such a mechanical seal and such a pressure adjustment unit may be adopted in each of the rotation drive unit 50 (see FIG. 8) and the winch 60 (see FIG. 7) which require airtightness.

More specifically, an actuator leakage prevention mechanical seal may be disposed inside the second casing accommodating the actuator 53 of the rotation drive unit 50 (not shown). In this case, as to the actuator leakage prevention mechanical seal, at least one mechanical seal is disposed solely or a plurality of mechanical seals is disposed in a multiplex manner in the second casing so that the airtightness or liquid tightness of a shaft configured to transfer the rotational force of the actuator 53 can be maintained. In other words, the actuator leakage prevention mechanical seal is identical in configuration and function to the above-described rotating part leakage prevention mechanical seal 18 except that the location where the actuator leakage prevention mechanical seal is disposed is different from the location where the above-described rotating part leakage prevention mechanical seal 18 is disposed.

Furthermore, an actuator pressure adjustment unit (not shown) configured to increase pressure inside the second casing may be further includes. In this case, the actuator pressure adjustment unit is also identical in configuration and function to the above-described generator pressure adjusting unit 19 except that the location where the actuator pressure adjustment unit is disposed is different from the location where the above-described generator pressure adjusting unit 19 is disposed.

Additionally, a winch leakage prevention mechanical seal (not shown) may be further included such that the airtightness or liquid tightness of a take-up shaft which is rotated by a winch motor can be maintained. The winch leakage prevention mechanical seal is disposed inside a third casing configured to accommodate the winch motor, and is identical in configuration and function to the above-described rotating part leakage prevention mechanical seal 18 except that the location of the winch leakage prevention mechanical seal is different from the location where the above-described rotating part leakage prevention mechanical seal 18 is disposed. Furthermore, a winch pressure adjustment unit (not shown) configured to increase pressure inside the third casing accommodating the winch motor may be further included. In this case, the winch pressure adjustment unit is identical in configuration and function to the above-described generator pressure adjusting unit 19 except that the location of the winch pressure adjustment unit is different from the location where the above-described generator pressure adjusting unit 19 is disposed.

Furthermore, a pressure sensor (not shown) may be included in the second casing or third casing, may detect internal pressure, and may disseminate a risky situation. In other words, a first pressure sensor may be included in the second casing, or a second pressure sensor may be included in the third casing. Accordingly, a pressure sensor is disposed in at least any one of the first casing 14, the second casing, or the third casing.

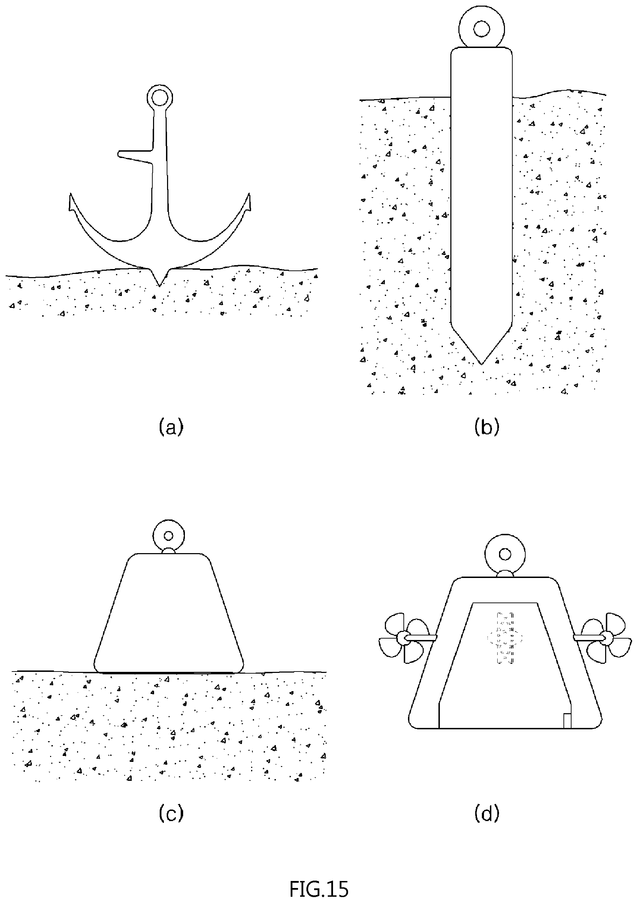

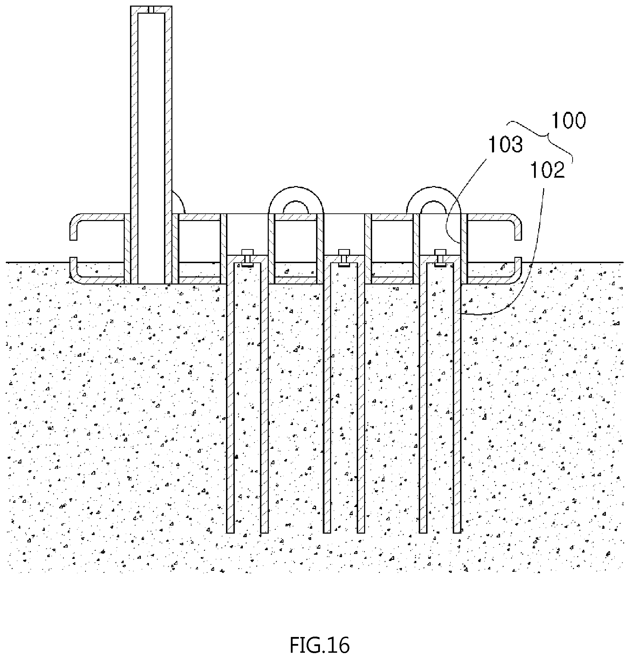

FIGS. 15 and 16 are sectional views of the anchoring means shown in FIG. 3.

The submersible power generation platform according to the present invention may include an anchoring means 100 (see FIG. 3). In this case, the anchoring means 100 is a member which is coupled to the fastening rope 40 or the lifting and lowering rope 61 of the winch 60 and fastened to a water channel. In this case, the water channel includes not only a floor but also a location in the water. As shown in FIGS. 15(a) to 15(c), the anchoring means 100 may be one of anchors, stakes, and weights having various shapes. However, the anchoring means 100 is not necessarily limited to these shapes, but may be formed in various shapes as long as the anchoring means having the various shapes can fasten the fastening rope 40 or lifting and lowering rope 61 to a water channel. Meanwhile, as shown in FIG. 15(d), the anchoring means 100 is a structure which moves using its own power. More specifically, the anchoring means 100 may be configured such that a hollow space configured such that air or water enters thereinto and exits therefrom is formed and a rotatable propeller is included. In this case, when water enters into the anchoring means 100, the anchoring means 100 is lowered. In contrast, when water exits from the anchoring means 100 and air enters into the anchoring means 100, the anchoring means 100 is lifted. Since the anchoring means 100 can be lifted and raised and obtains driving force by means of the propeller, the anchoring means 100 may move in the water, and may be located both in the floor of a water channel and in the water. When the anchoring means 100 is located in the water, the anchoring means 100 is disposed below the frame 20 by adjusting the amount of entering or exiting water or air. In particular, in the water where the direction of flowing water is changed by 5 or more degrees, the vertical location of the frame 20 considerably deviates from a design point. When the movable anchoring means 100 located in the water is used rather than the anchoring means 100 fastened to the floor of a water channel, the submersible power generation platform according to the present invention may be located at a location where power generation can be more stably performed.

Furthermore, as shown in FIG. 16, the anchoring means 100 may include stake portions 101 and a coupling portion 103 which are coupled to each other by means of pressure. The anchoring means 100 may be fastened to the floor of a water channel. In this case, each of the stake portions 101 is formed in a stake shape or a pipe shape, and is fastened in such a manner that one end thereof is stuck in the floor of a water channel. The coupling portion 103 includes accommodation spaces therein. The other end of the stake portion 101 is inserted into and seals a corresponding accommodation space. In this case, when the accommodation spaces configured to be sealed in such a manner that the stake portions are inserted thereinto are placed in a low-pressure state, the stake portions 101 and the coupling portion 103 are firmly coupled and fastened to each other, and thus generate considerable supporting force. When a plurality of anchoring means 100 is used, larger supporting force can be economically obtained.

Alternatively, the anchoring means 100 may include a first sectional member configured to be fastened to the floor of a water channel and a second sectional member configured to be coupled to the first sectional member by means of the magnetic force of an electromagnet (not shown).

In each case, the fastening rope 40 or lifting and lowering rope 61 is connected to the coupling portion 103, and is fastened to the floor of a water channel.

Furthermore, in the case of the submersible power generation platform according to a fourth embodiment of the present invention, which includes the second balancing rope 111, the pulley 113, the connection rope 115, and the take-up roll 110 (see FIG. 13), the pulley 113 is fastened to the floor of a water channel, and thus the pulley 113 acts as the anchoring means 100.

Meanwhile, a ring configured to be connected to a rope is disposed above the anchoring means 100, and thus easily connect the fastening rope 40 or lifting and lowering rope 61. A buoy may be temporarily installed such that the submersible power generation platform can be easily found on the surface of the water.

Meanwhile, the blades 11 used in the submersible power generation platform according to the present invention may be fabricated with a mold by using a glass fiber or carbon fiber material (see FIG. 14). However, the blades 11 are not necessarily limited to these materials, but may be made of various materials as long as the blades 11 generate power while being rotated by means of flowing water.

The blades 11 are coupled to bosses. More specifically, the centers of the blades are inserted into the holes of the bosses, and link washers are fastened to the centers of the blades by using bolts. In this case, the bosses are coupled to the power transmission shaft 12, and the power transmission shaft 12 directly rotates the generator 13 by ways of the gearbox, or operates the hydraulic pump and then rotates the generator 13 by means of the hydraulic power of the hydraulic pump. Meanwhile, the link washers prevent the blades 11 from being separated from the bosses, and adjust the angles of the blades 11 by using hydraulic cylinders or springs. When the hydraulic cylinders are used, the angles can be actively adjusted. When the springs are used, the angles of the blades 11 are automatically adjusted in accordance with the force applied to the blades 11 according to the elastic modulus of the springs, i.e., the Hooke's law. Meanwhile, the rotation of the blades 11 which are rotated to generate power is controlled by the brake. For example, when flow speed is excessively high and thus the blades 11 are rotated at high speed, when any one of the plurality of power generation units 10 fails and thus imbalance occurs in the frame 20, when the submersible power generation platform is floated to the surface of the water for the purpose of maintenance and repair, and when a device fails or an electric leakage occurs in a power line, the rotation of the blades 11 is stopped by the brake.

Meanwhile, bearings are used in the power generation unit 10, rotation drive unit 50, and winch 60 of the submersible power generation platform according to the present invention (see FIG. 8). In this case, corrosion-resistant bearings or ceramic bearings may be used as the bearings in order to prevent corrosion attributable to flowing water. Ceramic bushings or bearings are robust to corrosion, but have strength corresponding to 1/10 of that of steel bearings. It is preferred that a plurality of ceramic bearings is used for each bearing in series or corrosion-resistant bearings are used. In particular, the submersible power generation platform according to the present invention requires a high load and corrosion resistance, and thus needle bearings usable in seawater are appropriate. However, the bearings are not necessarily limited thereto.

Meanwhile, the electricity generated by the submersible power generation platform according to the present invention is transmitted to a ground power transmission site via a power transmission network composed of a power line, a submarine cable, etc. In this case, the power transmission line may be supported by the fastening rope 40 and installed (see FIG. 2), or may be coupled to a submarine cable by way of a submarine collection box. The power transmission network may use DC or AC current. During power transmission, high-pressure power transmission is preferable in order to minimize power loss. However, the power transmission network and the power transmission method are not necessarily limited thereto.

As described above, the submersible power generation platform according to the present invention is configured such that the blades 11 are rotated at a design flow speed, and is selectively lifted and lowered by adjusting buoyancy inside the buoyant objects 30 or ducts 15 or using the winch 60 in order to prevent a collision with an adjacent ship, to perform maintenance and repair, or to avoid a disaster, such as a typhoon or the like (see FIG. 7). Furthermore, in order to perform maintenance and repair and avoid a disaster, the frame 20 may be rotated using the rotation drive unit 50 (see FIG. 8). This operation is controlled according to the situation. In this case, the control may be performed via a submarine cable on the land in a wired manner. The control may be performed by a mobile phone or the like in a wireless manner. In this case, it is preferable to use a programmable logic controller (PLC). When the PLC is used, flow speed, a power generation location, the rotation angle of the frame 20, the amount of power generated, the presence or absence of a failure, etc. can be checked at one time via a monitor, and a plurality of the submersible power generation platforms according to the present invention can be connected to a computer and then controlled. However, the control method is not necessarily limited to the above-described methods. Meanwhile, a communication line required for the control is supported by the fastening rope 40 and installed.

Although the present invention has been described in detail via the specific embodiments, this is intended to describe the present invention more specifically. It will be apparent that the present invention is not limited to the specific embodiments but may be modified or improved by those having ordinary knowledge in the art without departing from the technical spirit of the present invention.

All simple modifications and variations of the present invention fall within the scope of the present invention, and the range of the protection of the present invention will be apparent from the attached claims.

### Industrial Applicability

According to the present invention, the buoyant objects are disposed on both sides of the frame inside which the blades are disposed, and the fastening rope configured to fasten each of the buoyant objects to a water channel is coupled to the balance center portion of the buoyant object determined by considering the balance between forces, thereby maintaining the balance of the power generation platform and thus enabling the power generation platform to stably generate electricity in the water.

### [Description of Reference symbols]

5: rib 10: power generation unit
11: blades 12: power transmission shaft
13: generator 14: first casing
15: duct 15a: hollow
16: first partition 17: first piping part
17a: first pipe 17b: first valve
18: rotating part leakage prevention mechanical seal 19: generator pressure adjusting unit
20: frame 30: buoyant object
30a: balance center portion 32: second partition
33: hollow 35: second piping part
35a: second pipe 35b: second valve
40: fastening rope 41: first fastening rope
43: second fastening rope 50: rotation drive unit
52: second casing 53: actuator
54: driving pulley part 55: rope
56: driven pulley part 57: link
60: winch 61: lifting and lowering rope
70: first counter weight 71: first balancing rope
80: second counter weight 81: screw rod
90: third counter weight 100: anchoring means
101: stake portion 103: coupling portion
110: take-up roll 111: second balancing rope
113: pulley 115: connection rope
1: flowing water 150: duct complex

## Claims

1. A submersible power generation platform, comprising:
a power generation unit including blades configured to be rotated by flowing water and a generator configured to receive rotational force of the blades and generate electricity;
a frame configured to fasten the power generation unit therein so that the blades are disposed toward a front location from which the flowing water enters;
a pair of buoyant objects configured to be disposed on both sides of the frame, and to float the frame by means of buoyancy; and
one or more fastening ropes configured to fasten the buoyant objects to a water channel, wherein one end of each of the fastening ropes is coupled to a balance center portion on an outer surface of a corresponding one of the buoyant objects, determined by considering weight and buoyancy of each of the power generation unit, the frame, and the buoyant object, and flow speed of the flowing water, or an upstream portion of the buoyant object in the direction in which the flowing water enters, in order to maintain balance of the frame;
wherein the buoyant object coupled to the fastening rope is selectively lifted and lowered in the water and located at a predetermined water level so that the blades are rotated at a predetermined one of flow speeds which vary with water levels.

2. The submersible power generation platform of claim 1, further comprising a duct configured such that a flow path configured to pass the flowing water therethrough is formed therethrough, the power generation unit is fixedly disposed inside the flow path, and the duct guides the flowing water toward the blades;
wherein a hollow space is provided inside the duct, and the duct is selectively lifted and lowered in such a manner that air or water selectively enters into and exits from the duct.

3. The submersible power generation platform of claim 1,
wherein the balance center portion has a width in the direction in which the flowing water enters within a range of 8 to 12% of a length of the buoyant object based on a vertical axis passing through a center of the buoyant object in a lengthwise direction thereof.

4. The submersible power generation platform of claim 1,
wherein the submersible power generation platform is disposed in an ocean, a first fastening rope, which is any one of the fastening ropes, connects an upstream portion of the buoyant object to a portion of a floor of the ocean in front of the frame, and a second fastening rope, which is a remaining one of the fastening ropes, connects a back portion of the buoyant object to a portion of the floor of the ocean in back of the frame, thereby enabling the submersible power generation platform to generate power by means of a tidal current in which a flow direction of seawater is reversed.

5. The submersible power generation platform of claim 1,
wherein the frame is rotated relative to the buoyant objects.

6. The submersible power generation platform of claim 5, further comprising a first rotation drive unit configured to include an actuator for generating rotational force, which is a geared motor or hydraulic device, and to rotate the frame.

7. The submersible power generation platform of claim 5, further comprising a second rotation drive unit configured to include a driving pulley part configured such that first and second pulleys disposed in parallel with each other are coupled to and rotated along with an actuator, which is a geared motor or hydraulic device, and a driven pulley part configured such that third and fourth pulleys disposed in parallel with each other are coupled to one side or both sides of the frame and are rotated by rotational force of the driving pulley part;
wherein when the driving pulley part is rotated in a first rotation direction, which is any one of clockwise and counterclockwise directions, a first rope coupled to the third pulley rotates the driven pulley part in the first rotation direction while being wound around the first pulley; and
wherein when the driving pulley part is rotated in a second rotation direction, which is a direction opposite to the first rotation direction, a second rope coupled to the fourth pulley rotates the driven pulley part in the second rotation direction while being wound around the second pulley.

8. The submersible power generation platform of claim 5, further comprising a third rotation drive unit configured to include a link device in which at least two links are coupled through pin coupling, wherein the links are operated by an actuator, which is a geared motor or hydraulic device.

9. The submersible power generation platform of claim 5, further comprising a fourth rotation drive unit configured to include a toothed driving sprocket configured to be coupled to an actuator, which is a geared motor or hydraulic device, and to be axially rotated and a toothed driven sprocket configured to be axially rotatably coupled to one side or both sides of the frame, wherein the driven sprocket is coupled to the driving sprocket via a chain and is rotated.

10. The submersible power generation platform of claim 1, further comprising:
a lifting and lowering rope configured to be fixedly coupled to a floor of a water channel; and
a winch configured to selectively lift and lower the frame by selectively winding and unwinding the lifting and lowering rope.

11. The submersible power generation platform of claim 1, further comprising:
a first balancing rope configured to couple the pair of the buoyant objects or both sides of the frame to each other; and
a first counter weight configured to be coupled to the first balancing rope and to maintain balance between both sides of the frame.

12. The submersible power generation platform of claim 1, further comprising a rotating part leakage prevention mechanical seal in which a mechanical seal is disposed solely or a plurality of mechanical seals is disposed in a complex manner in a first casing configured to accommodate the generator so that airtightness or liquid tightness of the power transmission shaft configured to transfer the rotational force of the blades is maintained.

13. The submersible power generation platform of claim 1, further comprising a generator pressure adjusting unit configured to prevent the flowing water from entering by increasing pressure inside a first casing configured to accommodate the generator.

14. The submersible power generation platform of claim 1, further comprising an anchoring means configured to be formed in a pile or pipe shape and to include a stake portion configured such that one end thereof is stuck and fastened in a floor of a water channel and a coupling portion configured such that an accommodation space configured to be sealed in such a manner that the stake portion is inserted thereinto is formed therein, wherein the stake portion is coupled to the coupling portion when the accommodation space is in a low-pressure state.

15. The submersible power generation platform of claim 1, further comprising:
a second balancing rope configured to couple the pair of the buoyant objects or both sides of the frame to each other;
a pulley configured to be fixedly disposed on a floor of a water channel;
a connection rope configured to be wound around the pulley, wherein one end of the connection rope is coupled to the second balancing rope and a remaining end of the connection rope is wound in a direction of the frame; and
a take-up roll configured to the remaining end of the connection rope.
